# EUROPEAN PATENT APPLICATION

(11) **EP 1 753 177 A1**
(43) Date of publication of application: **14.02.2007**
(21) Application number: 05017513.2
(22) Date of filing: 11.08.2005
(51) Int. Cl.: H04L 12/56, G06F 3/02

(54) **Wireless system providing unidirectional multi-channel communication for wireless input devices and corresponding method**

(71) Applicant: TOPSEED TECHNOLOGY CORP., Chung Ho City, Taipei Hsien, Taiwan (CN)
(72) Inventor: Chi, Chung-Ping c/o Topseed Technology Corp., Chung Ho City Taipei Hsien (TW)
(74) Representative: TER MEER - STEINMEISTER & PARTNER GbR

(57) **Abstract**

A computer communicates with a plurality of input devices through unidirectional multi-channels. The computer includes a receiver capable of receiving signals of multi-channels. The transmitters of different input devices use different communication channels. The receiver includes memory to store the different communication channels used by the different input devices whereby the receiver can receive signals according to a predetermined channel sequence. The receiver is triggered to a training mode when the user changes an assigned channel for an input device. The input device sends switched channel information characterized by ID code through a common channel to the receiver and then the receiver receives the signal from the input device according to the switched channel information.

## Description

### BACKGROUND OF THE INVENTION

### Field of the Invention

The present invention relates to a wireless communication technology for computer peripherals, especially to a unidirectional multi-channel communication technology for multiple transmitters and single receiver.

### Description of Related Art

Computers become omnipresent for modem society and the machine-man interfaces such as digital tablet, joystick, game pad, remote controller and 3D pointing device are often used besides keyboard and mouse. Those input devices are connected to I/O ports of a host computer through connection wires. However, the I/O ports are generally with limited number and resource for computer; and the connection wires will get the operation environment into mess.

The wireless input devices for computers become more and more popular, however, still much room leaves for improvement. The current commercially available integrated type wireless input devices, for example a wireless mouse integrated with a wireless keyboard can share one receiver. For example, US Pat No. 5,854,621, disclosed a wireless interface with a single-way communication between the transmitters and the receiver. The communication between multiple transmitters and single receiver can be achieved by using simple ID code. However, the number of accessible transmitters is still limited. As stated in Col. 2, lines 51 to 52 of the '621 patent, there are only two transmitters available when sharing one receiver. Moreover, as stated in Col. 9, lines 26 to 29 of the '621 patent, the wireless interface suffers to external interference and the external interference cannot be solved by channel switching.

For the application requiring more input devices, a complicated skill is involved. US Pat. No. 5,881,366 discloses communication for multiple input devices sharing one receiver, wherein two-way communication and complicated ID code are used. However, this solution is of high cost and the communication is interfered when a plurality wireless devices share the same communication channel in a computer. The interference becomes more serous when more wireless devices are involved in the communication system. However, this issue is not addressed by the above-mentioned two prior arts. The channel selection proposed in the above-mentioned two prior arts uses approach similar to that in analog cordless phone, which is intended to solve the interference of off-system devices using the same communication channel. This approach cannot solve the interference of intra-system devices using the same communication channel.

Moreover, in many applications, such as office, Internet café and library, the computers are arranged within short distance, for example, within 1 meter. The effective distance for radio frequency (RF) communication is more than 1.5 meter. One computer may have the risk to receive a wireless signal sent from the wireless transmitter of an adjacent computer. Therefore, the interference of intra-system devices and off-system devices should be simultaneously addressed and are not solved by current wireless input devices of computers.

### SUMMARY OF THE INVENTION

The present invention intends to provide a wireless communication method and apparatus, wherein a computer communicates with a plurality of input devices by using a single receiver. The input devices send input signals to the receiver of the computer through different channels. The receiver can identify the channel used by a particular input device and update the channel information after a training mode when user changes a channel for an input device. The computer can be one of personal computer, workstation, personal digital assistant and game console. The input device can be one of mouse, keyboard, digital tablet, joystick, game pad, and touch pad. The computer can communicate with input devices with each being different types, or input devices belonging to the same type, such as two mice and/or three keyboards.

The present invention provides a low-power wireless communication method to provide unidirectional communication between a computer and a plurality of input devices. Each of the input devices comprises a transmitter and the computer comprises a receiver. The input devices are assigned with different channels and the input signal sent from one input device is prefixed with an ID code characterizing the input device. The receiver comprises memory to store the assigned channels and ID codes, whereby the receiver can receive signals from the input devices in a predetermined channel sequence. The user can activate the receiver into a training mode when the channel used for one input device is changed. The input device sends switched channel information characterized by ID code through a common channel to the receiver and then the receiver receives the signal from the input device according to the switched channel information.

According to one aspect of the present invention, the present invention provides a wireless communication method and apparatus between a computer and a plurality of input device with one receiver of the computer.

According to another aspect of the present invention, the present invention provides a wireless communication method and apparatus for using multiple channels simultaneously.

According to still another aspect of the present invention, the present invention provides a unidirectional wireless communication method and apparatus using RF signals.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows the connection between a computer and a plurality of wireless input devices.
Fig. 2 shows an exemplary channel assignment.
Fig. 3 shows the channel switch for different input devices.
Fig. 4 shows the packet format of the input signal.
Fig. 5 shows the flowchart of the method according to a preferred embodiment of the present invention.
Fig. 6 shows a block diagram of the input device in the present invention.
Fig. 7 shows a block diagram of the receiver in the present invention.

### DETAILED DESCRIPTION OF THE INVENTION

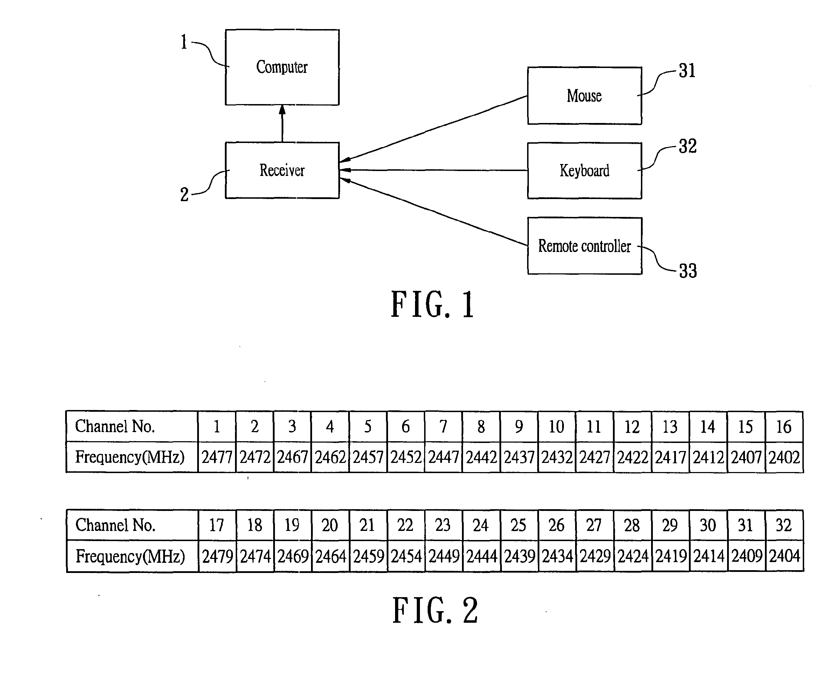

Fig. 1 shows an application of the present invention, wherein a plurality of wireless input devices 31-33 are connected to a computer 1 through wireless medium. Each of the wireless input devices 31-33 comprises a wireless RF transmitter and the computer 1 comprises a receiver 2 corresponding to the wireless input devices 31-33. The wireless input devices 31-33 can be any of computer input devices and the combination thereof. As shown in Fig. 1, there are a mouse 31, a keyboards 32 and a remote controller 33 connected to the computer 1, namely, three input devices of three categories connected to the computer 1.

The transmitter of the wireless input devices 31-33 emits input signal to the receiver 2 and the input signal is modulated at Frequency Shift Keying (FSK) scheme. Provided that the carrier frequency is 2.4GHz and the frequency separation is 5MHz, tens or hundreds of communication channels can be defined. Fig. 2 shows a channel allocation map according to a preferred embodiment of the present invention, wherein 32 communication channels are allocated in this table and the actual number of tables is up to design choice.

According to a preferred embodiment of the present invention, the input devices 31-33 of the same category are assigned with a respective predetermined channel. For example, the mouse 31 uses the first communication channel; the keyboard 32 uses the second communication channel while the remote controller 33 uses the third communication channel. It should be noted the above assignment can also be changed. The receiver 2 comprises a memory to save the default predetermined channel for each of the input devices 31-33 and the detailed information thereof will be stated later. Therefore, the receiver 2 can receive data from the input devices 31-33 through the default predetermined channel for the input devices 31-33.

When one of the input devices 31-33 is operated, the input signal generated therefrom is composed of periodic signal of many cycles in a predetermined time slot. The receiver 2 will receive signal form the input devices 31-33 with channel jumping. For example, receiver 2 will cyclically receive signal from the input devices 31-33 with the channel sequences of the first channel, the second channel and the third channel. The input signal preferably has a specific reception time period to ensure that all input signals from the input devices (31-33) can be received by the receiver 2 without ambiguity and loss. According to the experiment of the inventor, the input device 31-33 can be operated without delay or intermittence if the input signal for one input device (31-33) can be received 17 times per second. Therefore, the specific reception time period is below 59 ms when there is only one input device (31-33) and only one channel. The specific reception time period is below 19.67ms (59÷3 =19.67) when there are three input devices (31-33) and accordingly three channels, whereby the total time period is below 59ms. Moreover, for a system with four input devices, the reception time period for each input device is set to below 14.75ms (59÷4= 14.75) to prevent ambiguity and loss.

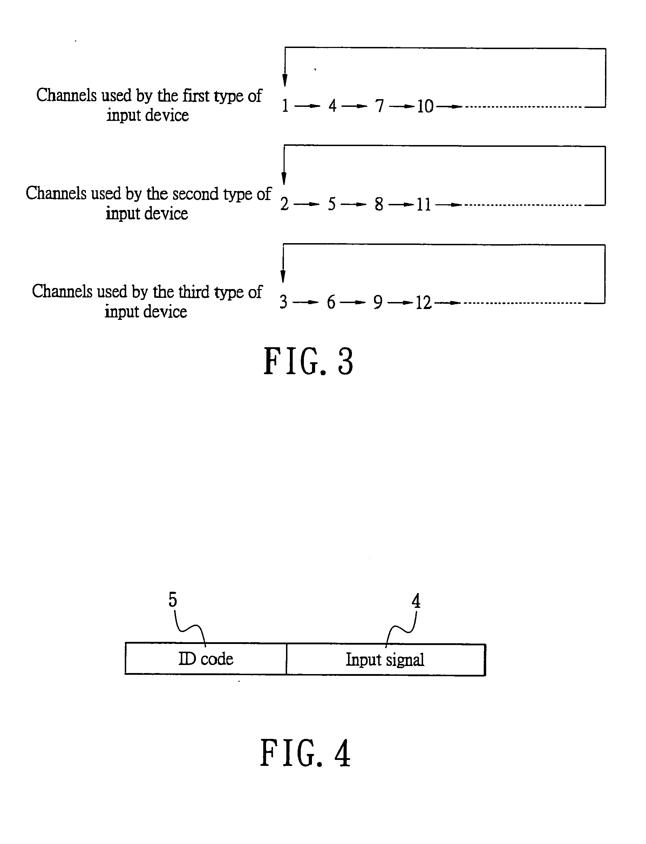

Moreover, the present invention also provides a channel change mechanism to prevent the inter-channel interference of the input devices (31-33) with respect to other device in the same system. The channel change mechanism is preferably performed with a predetermined channel sequence. Each of the input devices 31-33 selects a plurality of channels in the channel allocation map shown in Fig. 2. Fig. 3 shows the predetermined channel sequence for each of the input devices 31-33. Those selected channels are arranged in predetermined sequence and there is no shared channel for the input devices 31-33. As shown in Fig. 3, the mouse 31 first uses the first channel and then uses the fourth channel and the seventh cannel, respectively, by pressing a channel change switch, which will described in more detail later. Moreover, the keyboard 32 first uses the second channel and then uses the fifth channel and the eighth cannel, respectively, by pressing the channel change switch. The predetermined channel sequence shown in Fig. 3 is just an example and the predetermined channel sequence can be changed as long as no shared channel for the input devices 31-33. Alternatively, the channel sequence can be assigned randomly for the input devices 31-33. It is of little chance for the input devices 31-33 to use the same channel. Once it happens, the problem can be solved by pressing the channel change switch once or twice further.

In the present invention, the transmitter-receiver pair has unidirectional transmission (single-way transmission), namely, the input devices 31-33 send signal to the receiver 2 and the receiver 2 cannot send signal back to the input devices 31-33. Therefore, a mechanism is provided at the receiver 2 end to learn the signal sent from the input devices 31-33 when the channel of the input devices 31-33 is changed or updated. More particularly, a training mode switch is provided on the receiver 2 to activate the receiver 2 to a training mode. Moreover, a pairing switch is provided on the input devices 31-33 to activate the input devices 31-33 to a pairing mode and sending channel information. When a channel of one of the input devices 31-33 is changed, the receiver no more recognizes the input devices 31-33. At this time, the user can press the training mode switch to drive the receiver 2 to the training mode. Preferably, lamps can be used to indicate the receiver 2 being in training mode. In the training mode, the receiver 2 receives signal through a default common channel. Afterward, the user presses the pairing switch of the input devices 31-33 to send the switched channel information. The receiver 2 will store the switched channel information to the memory thereof and receive signal according to the switched channel information. According to Fig. 1, the receiver 2 initially receives signal of the input devices 31-33 through the first channel, the second channel and the third channel. The receiver 2 will receive signal of the input devices 31-33 through the fourth channel, the second channel and the third channel after being trained by the switched channel information.

The default common channel is used to transmit the switched channel information and is not like the channel for sending data signal as those shown in Fig. 2. Moreover, the input devices 31-33 use the same default common channel and therefore the receiver can learn the switched channel information of the input devices 31-33 in training mode.

Fig. 4 shows a format of the signal sent from the input devices 31-33, the input signal 4 and the switched channel information sent from the input devices 31-33 are prefixed with an ID code 5 associated with the input device. In training mode, the receiver can identify the input devices 31-33 from the ID code 5 to update the switched channel information.

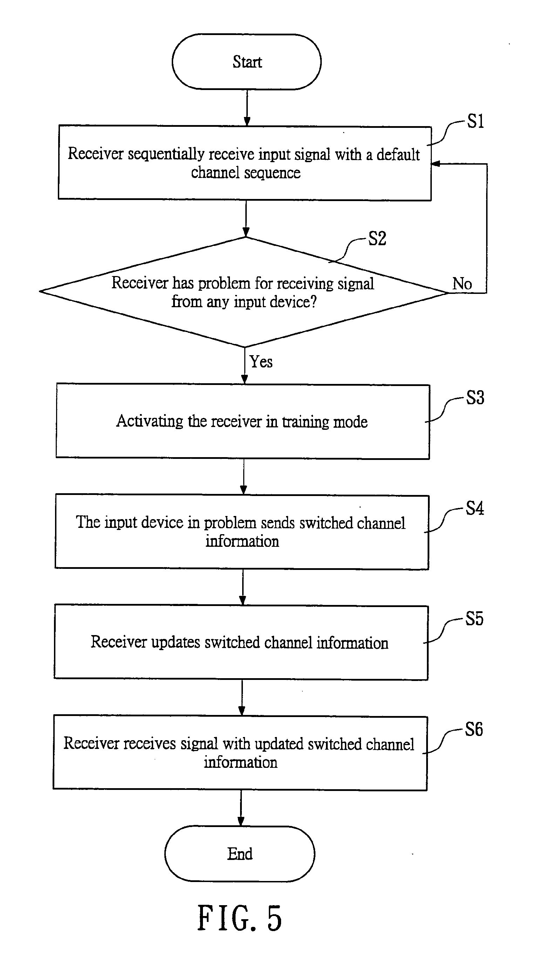

Fig. 5 shows the flowchart of the method according to a preferred embodiment of the present invention. The receiver 2 first sequentially receives the input signal from the input devices 31-33 with a default channel sequence in step S1. The receiver 2 will receive signal according to the default channel sequence if all input signals from the input devices 31-33 can be successfully received. When the receiver 2 has problem in receiving any signal from the input devices 31-33 due to channel change of the input devices 31-33 in step S2, the user then presses the training mode switch to drive the receiver 2 to the training mode in step S3. The user then presses the pairing switch of the input devices 31-33 in problem to send the switched channel information in step S4. The receiver 2 receives the switched channel information to update the switched channel information thereof in step S5. Afterward, the receivers 2 ends the training mode and starts to receive the signal from the input devices 31-33 according to the updated switched channel information in step S6.

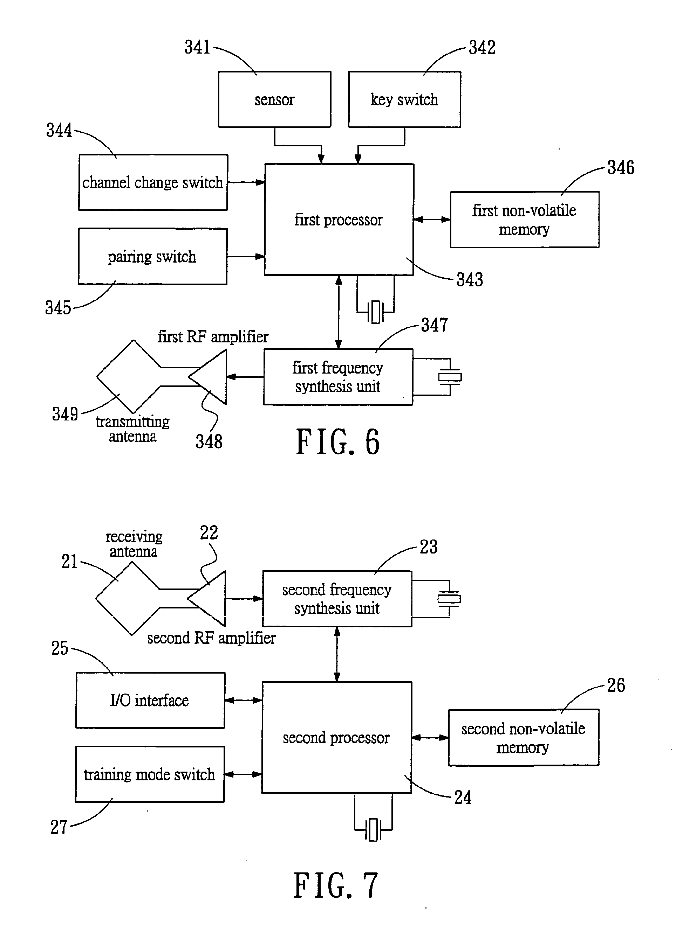

The above-mentioned method can be implemented by the circuit block shown in Figs. 6 and 7. Fig. 6 shows a typical block diagram for the input devices 31-33, wherein a first processor 343 is used as a console to control other components. The input device further comprises a key switch 342 for instruction input, a sensor 341 for sensing user operation (such as those for mouse or digital pad). The first processor 343 receives instruction signals from the key switch 342 and the sensor 341 and converts the instruction signals to computer-readable input signals. The input device further comprises a first non-volatile memory 346 to store the accessible channel and ID codes of the input devices 31-33, and the first processor 343 encodes the input signal according to the stored data in the first non-volatile memory 346. The first processor 343 further controls a first frequency synthesis unit 347 to modulates the input signals 4 and then the modulated input signal 4 is transmitted through a first RF amplifier 348 and a transmitting antenna 349. The channel change switch 344 and the pairing switch 345 are electrically connected to the first processor 343 for user to activate channel switch mode and pairing mode. In the pairing mode, the input device can send switched channel information and the switched channel information is saved in the first non-volatile memory 346 through the channel switch button 344.

Fig. 7 shows a typical block diagram for the receiver 2, which comprises a second processor 24 as a console. The receiver 2 further comprises a second non-volatile memory 26 for storing the accessible channel and ID codes of the input devices 31-33. In normal operation, namely, not the training mode, the second processor 24 controls a second frequency synthesis unit 23 for frequency-jumping reception and demodulation. Therefore, the received signal through a receiving antenna 21 and a second RF amplifier 22 can be correctly received. The received signal is processed by the second processor 24 for identifying source by the ID code thereof and for performing necessary signal processing. Afterward, the processed signal is send to a computer 1 through an I/O interface 25 compatible with he I/O interface of the computer 1. The receiver 2 further comprises a training mode switch 27 electrically connected to the second processor 24 to switch a training state for the receiver 2. The second processor 24 controls the second frequency synthesis unit 23 for receiving the switched channel information through the common channel in the training mode.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A method providing unidirectional multi-channel communication for a computer 1 and a plurality of wireless input devices 31-33, each of the wireless input devices 31-33 comprising a transmitter and the computer 1 comprising a receiver 2 for receiving at least one wireless signal from the transmitter, the method comprising the steps of:
assigning different predetermined communication channels to the wireless input devices;
when user operating one wireless input device, the wireless input device sending a plurality of repeated input signals within a predetermined time slot with a predetermined communication channel; and
the receiver 2 receiving the input signal 4 with a predetermined channel sequence within a predetermined reception time period and repeatedly receiving the input signal 4 with the predetermined channel sequence.

2. The method as in claim 1, wherein the predetermined reception time period of the receiver 2 is similar to the predetermined time slot.

3. The method as in claim 1, wherein the predetermined reception time period of the receiver 2 is not larger than 59 ms for one channel.

4. The method as in claim 1, wherein the input signal 4 transmitted from the transmitter is prefixed with an ID code 5 for the transmitter and used for identifying the transmitter.

5. The method as in claim 4, wherein the ID code 5 is a constant value.

6. The method as in claim 4, wherein the predetermine channels are switchable.

7. The method as claim 6, further comprising the steps of:
providing a training mode to the receiver to enable the receiver to receive signal through a common channel;
providing a pairing mode to the input device to enable the input device to send a switched channel information through the common channel; and
the receiver updating a channel sequence thereof after receiving the switched channel information.

8. The method as in claim 7, wherein the switched channel information is prefixed with an ID code 5 associated with an input device.

9. The method as in claim 7, wherein the common channel is different to predetermined communication channels.

10. A wireless communication system between a computer 1 and a plurality of input devices 31-32, comprising:
at least two input devices, each comprising a transmitter, the transmitters sending input signals through different predetermined communication channels, wherein the input device sends a plurality of repeated input signals 4 within a predetermined time slot with the predetermined communication channel when user operating the wireless input device;
a receiver 2 operatively connected to the computer 1 and receiving the input signal with a predetermined channel sequence within a predetermined reception time period and repeatedly receiving the input signals 4 with the predetermined channel sequence.

11. The wireless communication system as in claim 10, wherein the transmitter and the receiver 2 use RF channel.

12. The wireless communication system as in claim 10, wherein the predetermined reception time period of the receiver 2 is similar to the predetermined time slot.

13. The wireless communication system as in claim 10, wherein the predetermined reception time period of the receiver 2 is not larger than 59 ms for one channel.

14. The wireless communication system as in claim 10, wherein the input signal 4 transmitted from the transmitter is prefixed with an ID code 5 for the transmitter and used for identifying the transmitter.

15. The wireless communication system as in claim 14, wherein the ID code 5 is constant value.

16. The wireless communication system as in claim 10, further comprising:
a channel change switch 344 for switching a channel used for the input device;
a pairing switch 345 enabling the input device for a pairing mode and the input device sending a switched channel information through the common channel; and
the receiver further comprising a training mode switch 27 to enable the receiver 2 to operate in a training mode wherein the receiver 2 receives the switched channel information through the common channel.

17. The wireless communication system as in claim 16, wherein the common channel is different to predetermined communication channels.
